(19) Europäisches Patentamt
European Patent Office
Office européen des brevets

(11) EP 4 815 070 A1

# (12) EUROPEAN PATENT APPLICATION

published in accordance with Art. 153(4) EPC

(43) Date of publication:
**30.09.2026 Bulletin 2026/40**

(21) Application number: **24895415.8**

(22) Date of filing: **11.05.2024**

(51) International Patent Classification (IPC):
***H01M 4/80*** *(2006.01)* ***H01M 4/70*** *(2006.01)*
***H01M 10/00*** *(2006.01)*

(52) Cooperative Patent Classification (CPC):
**H01M 4/02; H01M 4/66; H01M 4/70; H01M 4/80; H01M 10/00; H01M 10/04;** Y02E 60/10

(86) International application number:
**PCT/CN2024/092661**

(87) International publication number:
**WO 2025/112304 (05.06.2025 Gazette 2025/23)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **28.11.2023 CN 202311617611**

(71) Applicant: **Contemporary Amperex Technology Co., Limited**
**Ningde, Fujian 352100 (CN)**

(72) Inventors:
- **LI, Mingling**
**Ningde, Fujian 352100 (CN)**
- **LIU, Xin**
**Ningde, Fujian 352100 (CN)**
- **HUANG, Qisen**
**Ningde, Fujian 352100 (CN)**
- **LIU, Xianghui**
**Ningde, Fujian 352100 (CN)**
- **CAI, Qiguo**
**Ningde, Fujian 352100 (CN)**
- **LI, Cheng**
**Ningde, Fujian 352100 (CN)**

(74) Representative: **Gong, Jinping**
**CocreateIP**
**Neumarkter Straße 21**
**81673 München (DE)**

## (54) COMPOSITE CURRENT COLLECTOR, ELECTRODE SHEET, SECONDARY BATTERY AND ELECTRIC DEVICE

(57) A composite current collector, an electrode sheet, a secondary battery and an electric device. The composite current collector comprises a substrate layer and an electrically conductive layer, wherein the substrate layer has a first surface and a second surface, which are opposite each other; the electrically conductive layer is arranged on the first surface and/or the second surface; and a hole channel is provided inside the electrically conductive layer. When a battery is in an abnormal working condition and causes the composite current collector to be stressed abnormally, the electrically conductive layer tends to fracture near the hole channel in a timely manner, such that the current transmission inside the current collector is weakened, and the risk of ongoing electrochemical reactions inside the battery under the abnormal working condition is reduced, which is conducive to reducing the risk of thermal runaway of the battery such as fire and explosion, thereby improving the safety performance of the battery.

3
321
322
32
31
32
FIG. 1



Processed by Luminess, 75001 PARIS (FR)

## Description

### CROSS-REFERENCE TO RELATED APPLICATIONS

The present application claims priority to Chinese Patent Application No. 2023116176116, filed on November 28, 2023 and entitled "COMPOSITE CURRENT COLLECTOR, ELECTRODE PLATE, SECONDARY BATTERY, AND POWER CONSUMING APPARATUS", which is incorporated herein by reference in its entirety.

### TECHNICAL FIELD

The present application relates to the field of secondary battery technologies, and in particular, to a composite current collector, an electrode plate, a secondary battery, and a power consuming apparatus.

### BACKGROUND

The statement herein only provides background information related to the present application and does not necessarily constitute the prior art.

Compared with a pure metal current collector, a composite current collector has advantages in many aspects. For example, the composite current collector has a conductive layer with a relatively small thickness, and a correspondingly relatively low weight. With continuous popularization of secondary batteries, an application range of composite current collectors also expands. For a conventional composite current collector, usually, a conductive layer is formed on a surface of a substrate layer. Compared with a pure metal current collector, although the conventional composite current collector has many advantages, in terms of alleviating a thermal runaway problem of a battery, the performance of the conventional composite current collector still remains to be improved.

### SUMMARY

A first aspect of the present application provides a composite current collector, including a substrate layer and a conductive layer, where the substrate layer has a first surface and a second surface that are opposite to each other; the conductive layer is disposed on the first surface and/or the second surface; and a via is provided inside the conductive layer.

In the foregoing composite current collector, vias are mainly disposed inside the conductive layer. When a battery is in an abnormal working condition to cause the composite current collector to bear a force abnormally, the conductive layer tends to crack near the via timely, so that the current transmission inside the current collector is weakened, and the risk of ongoing electrochemical reactions inside the battery under the abnormal working condition is reduced, which is conducive to reducing a risk of thermal runaway such as fire or explosion occurring in the battery, thereby improving the safety performance of the battery.

In some implementations, a plurality of vias is provided, and the plurality of vias is disposed at intervals. Disposition of the plurality of vias may provide more crack sites. When the battery is in an abnormal working condition, current transmission inside the current collector is weakened more timely, thereby further reducing the risk of thermal runaway such as fire or explosion occurring in the battery.

In some implementations, a spacing between adjacent vias ranges from 5 mm to 60 mm. The spacing between adjacent vias falls within this range, so that the conductive layer can maintain relatively stable intrinsic performance based on providing a suitable quantity of vias.

In some implementations, the via includes a blind via. Optionally, an opening of the blind via faces the substrate layer. That the opening of the blind via faces the substrate layer may be beneficial for embedding another material layer to improve the binding force between the conductive layer and the substrate layer.

In some implementations, a depth of the blind via ranges from 30 nm to 500 nm. That the blind via falls within this range can provide a good embedding effect, helping to improve the binding force between the conductive layer and the substrate layer.

In some implementations, a hole size of the blind via ranges from 5 mm to 50 mm. The hole size of the blind via falls within this range, so that there can be a suitable quantity of blind holes and a good embedding effect can be provided.

In some implementations, a percentage of a hole area of the blind via to a cross-sectional area of the conductive layer ranges from 0.5% to 54.5%. The percentage of the hole area of the blind via to the cross-sectional area of the conductive layer falls within this range, so that there can be a suitable quantity of blind vias, and the conductive layer can maintain relatively stable intrinsic performance.

In some implementations, a cross-sectional shape of the blind via includes at least one of a circular shape, an elliptic shape, and a polygonal shape.

In some implementations, the via includes a through-hole via. In one aspect, disposition of the through-hole via may be beneficial for embedding another material layer to improve the binding force between the conductive layer and the substrate layer. In the other aspect, the via may be used as a gas exhausting passage, helping exhaust a gas that may be generated in a process of preparing the composite current collector.

In some implementations, a hole size of the through-hole via ranges from 30 μm to 500 μm. The hole size of the through-hole via falls within this range, so that there can be a suitable quantity of through-hole vias and a good embedding effect can be provided.

In some implementations, a percentage of a hole area of the through-hole via to the cross-sectional area of the conductive layer ranges from 0.001% to 0.484%. The percentage of the hole area of the through-hole via to the cross-sectional area of the conductive layer falls within this range, so that there can be a suitable quantity of through-hole passages, and the conductive layer can maintain relatively stable intrinsic performance.

In some implementations, a cross-sectional shape of the through-hole via includes at least one of a circular shape, an elliptic shape, and a polygonal shape.

In some implementations, the through-hole via includes first through-hole vias and second through-hole vias, and a hole size of the first through-hole via is greater than a hole size of the second through-hole via. The hole size of the first through-hole via is relatively large, so that when the battery is in an abnormal working condition, the crack of the conductive layer is more likely to spread from the position of the first through-hole via to the surroundings, which is beneficial to increase the crack rate of the conductive layer and weaken current transmission in the current collector more timely. However, the second through-hole via has a relatively small hole size, so that a larger quantity of through-hole vias may be provided per unit area of the conductive layer, thereby further promoting exhausting of a gas that may be generated in a process of preparing the composite current collector.

In some implementations, a ratio of a quantity of the first through-hole vias to a quantity of the second through-hole vias is (20 to 40):(60 to 80). The ratio of the quantity of first through-hole vias to the quantity of second through-hole vias falls within this range, so that the quantity of first through-hole vias having a larger hole size and the quantity of second through-hole vias having a smaller hole size can better match each other, which is beneficial to further promoting the effects of cracking and gas exhausting of the conductive layer.

In some implementations, a hole size of the first through-hole via ranges from 300 μm to 500 μm. Optionally, a hole size of the second through-hole via ranges from 30 μm to 300 μm.

In some implementations, the composite current collector further includes a binding layer, and the binding layer is located between the substrate layer and the conductive layer. Through disposition of the binding layer, a binding force between the substrate layer and the conductive layer may be improved, helping the composite current collector to maintain a more stable structure.

In some implementations, the binding layer includes a body portion and a protrusion portion, the protrusion portion protrudes from the body portion, and the protrusion portion is embedded in the via. The protrusion portion is embedded in the via of the conductive layer, so that the contact area between the binding layer and the conductive layer can be enlarged, and a more stable binding effect is formed between the binding layer and the conductive layer, thereby further improving the binding force between the conductive layer and the binding layer, further improving the binding force between the substrate layer and the conductive layer, and promoting improvement in the structural stability of the composite current collector.

In some implementations, a thickness of the body portion ranges from 0.5 μm to 5 μm. The thickness of the body portion falls within this range, so that the binding layer can exert a relatively good binding function, and the composite current collector can maintain a relatively suitable overall thickness range.

In some implementations, the binding layer includes a binder. Optionally, the binder includes one or more of isocyanate, polyester polyol, polyurethane, an epoxy resin, polyacrylate, poly(vinyl acetate), unsaturated polyester, a phenolic resin, a urea-formaldehyde resin, a modified polyolefin resin, a silicone resin, an ethylene-acrylic acid copolymer, an ethylene-vinyl acetate copolymer, an ethylene-vinyl alcohol copolymer, an acrylate resin, polycarbonate, and polyamide.

In some implementations, the binding layer includes filler particles. Introducing the filler particles to the binding layer is beneficial to increase the elastic modulus of the composite current collector. Further, a problem of wrinkling in a process of machining the electrode plate may be alleviated.

In some implementations, a mass percentage of the filler particles to the binding layer ranges from 10% to 20%. The mass percentage of the filler particles to the binding layer falls within this range, so that the binding layer can have suitable binding performance and a suitable elastic modulus.

In some implementations, Dv50 of the filler particles ranges from 30 nm to 500 nm. The filler particles whose particle size distribution falls within this range may be relatively uniformly dispersed in the binding layer, thereby promoting further improvement of the elastic modulus of the composite current collector.

In some implementations, the filler particles include insulating filler particles. The use of the insulating filler particles can reduce a risk that the introduction of the filler particles negatively affects the electrical conductivity of the

composite current collector, thereby helping enable the composite current collector to maintain suitable and stable electrical conductivity.

In some implementations, the filler particles include at least one of aluminum oxide, silicon carbide, silicon nitride, silicon oxide, calcium oxide, boehmite, titanium dioxide, zirconium dioxide, magnesium oxide, zinc oxide, barium sulfate, and boron carbide.

In some implementations, the filler particles include first filler particles, and the first filler particles have one end extending into the body portion and the other end extending into the protrusion portion. The first filler particles have one part located in the body portion of the binding layer and the other part located in the protrusion portion of the binding layer. In this way, a support site may be provided between the conductive layer and the binding layer, to help improve a support force of the binding layer for the conductive layer, and further improve an elastic modulus of the composite current collector.

In some implementations, Dv50 of the first filler particles ranges from 200 nm to 500 nm.

In some implementations, the filler particles further include second filler particles, and Dv50 of the second filler particles is less than Dv50 of the first filler particles. The second filler particles have a relatively small particle size distribution, and may be relatively uniformly dispersed in the binding layer, thereby further promoting improvement of the elastic modulus of the composite current collector. In addition, the second filler particles with a relatively small particle distribution can be better dispersed in the protrusion portion of the binding layer, that is, the second filler particles can be better dispersed in the via of the conductive layer, facilitating improvement in mutual support between the binding layer and the conductive layer and improving an elastic modulus of the composite current collector.

In some implementations, Dv50 of the second filler particles ranges from 30 nm to 200 nm.

In some implementations, a mass ratio of the second filler particles to the first filler particles is (30 to 50):(50 to 70). That the mass ratio of the second filler particles to the first filler particles fall within this range enables the second filler particles and the first filler particles to better match each other, to further improve the elastic modulus of the composite current collector.

In some implementations, the binding layer includes a flame retardant. Introduction of the flame retardant can improve a flame retarding effect of the composite current collector, and further reduce a risk of thermal runaway such as fire or explosion occurring in the battery in an abnormal working condition.

In some implementations, a mass percentage of the flame retardant to the binding layer ranges from 20% to 40%. The mass percentage of the flame retardant falls within this range, so that the composite current collector can have a relatively good flame retarding effect and the binding layer can have relatively good binding performance.

In some implementations, the flame retardant includes at least one of decabromodiphenyl oxide, hexabromocyclododecane, polyvinyl chloride, tri-(2,3-dibromopropyl)isocyanate, sodium chloride, sodium acetate, zinc borate, ammonium molybdate, zirconium phosphate, and antimony oxide.

In some implementations, the flame retardant includes an organic flame retardant and an inorganic flame retardant, a mass percentage of the organic flame retardant to the binding layer ranges from 10% to 20%, and a mass percentage of the inorganic flame retardant to the binding layer ranges from 10% to 20%. The organic flame retardant may be better mixed with the binding layer by using a principle of like dissolves like. The inorganic flame retardant may have a corresponding support function for the binding layer while having a flame retarding function.

In some implementations, a surface of the conductive layer further includes a passivation layer. The passivation layer may protect the conductive layer and reduce corrosion caused by the electrolyte solution to the conductive layer, thereby helping improve structural stability of the composite current collector. Optionally, the passivation layer includes at least one of chromate, phosphate, aluminum oxide, silicon dioxide, and silicon nitride.

A second aspect of the present application provides an electrode plate. The electrode plate includes the composite current collector.

A third aspect of the present application provides a secondary battery. The secondary battery includes the electrode plate.

A fourth aspect of the present application provides a power consuming apparatus. The power consuming apparatus includes at least one of the composite current collector, the electrode plate, and the secondary battery.

## BRIEF DESCRIPTION OF THE DRAWINGS

To better describe and illustrate embodiments or examples provided in the present application, reference may be made to one or more drawings. However, the additional details or examples used to describe the drawings should not be regarded as limitations to the scopes of any one of the applications disclosed, the embodiments or examples described for the present, and the most modes of the examples understood for the present. In addition, in all the accompanying drawings, same components are indicated by same reference numerals. In the accompanying drawings:

FIG. 1 is a schematic diagram of a composite current collector according to an implementation of the present application.

FIG. 2 is a schematic diagram of a composite current collector according to another implementation of the present application.

FIG. 3 is a schematic diagram of a secondary battery according to an implementation of the present application.

FIG. 4 is an exploded view of a secondary battery according to an example of the present application as shown in FIG. 3.

FIG. 5 is a schematic diagram of a power consuming apparatus in which a secondary battery serves as a power supply according to an implementation of the present application.

Descriptions of reference numerals:

1: secondary battery; 11: case; 12: electrode assembly; 13: cover plate; 2: power consuming apparatus; 3: composite current collector; 31: substrate layer; 32: conductive layer; 321: blind via; 322: through-hole via; 33: binding layer; 331: body portion; 332: protrusion portion; 34: first filler particles; 35: second filler particles; and 36: flame retardant.

## DETAILED DESCRIPTION

For ease of understanding the present application, the present application is described more comprehensively below with reference to the related accompanying drawings. The accompanying drawings provide preferred examples of the present application. However, the present application can be implemented in many different forms, and is not limited to the examples described in the present application. On the contrary, an objective of providing these examples is to achieve a clearer and more comprehensive understanding of disclosed content of the present application.

Unless otherwise defined, all technical and scientific terms used in this specification have same meanings as those commonly understood by a person skilled in the art belonging to the present application. Terms used in this specification of the present application in this specification are only intended to describe specific examples, and are not intended to limit the present application. The term "and/or" used in this specification includes any and all combinations of one or more relevant items listed.

A "range" disclosed in the present application may be defined in a form of a lower limit and an upper limit. A given range is defined by selecting a lower limit and an upper limit, and the selected lower limit and upper limit define boundaries of a particular range. A range defined in this manner may be inclusive or exclusive of the end values, and any end value may be independently inclusive or exclusive and may be arbitrarily combined, that is, any lower limit may be combined with any upper limit to form a range. For example, if a range of 60 to 120 and 80 to 110 is listed for specific parameters, it is also expected to be understood as a range of 60 to 110 and 80 to 120. Additionally, if the minimum range values 1 and 2 and the maximum range values 3, 4 and 5 are listed, the following ranges are all contemplated: 1-3, 1-4, 1-5, 2- 3, 2-4 and 2-5. In the present application, unless otherwise specified, the value range "a to b" represents an abbreviated representation of any combination of real numbers between a and b, where a and b are both real numbers. For example, the numerical range "0 to 5" indicates that all real numbers between "0 to 5" have been listed in this article, and "0 to 5" is only a shortened representation of these numerical combinations. In addition, when a parameter is expressed as an integer greater than or equal to 2, it is equivalent to listing that the parameter is an integer such as 2, 3, 4, 5, 6, 7, 8, 9, 10, 11, 12, or the like. For example, when a parameter is expressed as an integer selected from "2 to 10", it is equivalent to lists integers 2, 3, 4, 5, 6, 7, 8, 9, and 10.

The terms "plurality", "multiple", and the like in the present application mean greater than 2 or equal to 2 in number, unless otherwise limited. For example, "one or more" means one or more than or equal to two.

Unless otherwise specified, all the implementations and optional implementations of the present application can be combined with each other form new technical solutions.

"Example" mentioned herein means that particular features, structures, or characteristics described with reference to the example may be included in at least one example or implementation of the present application. The term appearing at different positions of the specification may not necessarily refer to the same example or an independent or alternative example that is mutually exclusive with another example. A person skilled in the art explicitly or implicitly understands that the examples described in the specification may be combined with other examples. An "implementation" mentioned in this specification has a similar understanding.

A person skilled in the art may understand that, in a method in implementations or examples, a writing order of the steps does not imply a strict order of execution and does not impose any limitation on an implementation process, and a detailed execution order of the steps should be determined according to functions and possible internal logic of the steps. Unless otherwise specified, all the steps in the present application can be carried out, either in order or randomly, preferably in order in some examples. For example, the method including steps (a) and (b) indicates that the method may include steps (a) and (b) performed sequentially, or the method may include steps (b) and (a) performed sequentially. For example, reference to "the method may further include step (c)" indicates that step (c) may be added to the method in any order, e.g., the method may include steps (a), (b) and (c), or steps (a), (c) and (b), or steps (c), (a) and (b), or the like.

In the present application, in an open technical feature or technical solution described by using words such as "contain", "include", and "include", unless otherwise specified, not excluding additional members other than the listed members may be considered as providing a closed feature or solution consisting of the listed members, and further providing an open feature or solution including additional members other than the listed members, if no other descriptions are provided. For example, A includes a1, a2, and a3, and may further include other members, or may not include additional members, unless otherwise specified, which may be considered as providing a feature or solution "A consists of al, a2, and a3", and further providing a feature or solution "A not only includes a1, a2, and a3, but also includes other members".

In the present application, unless otherwise specified, A (such as B) indicates that B is a non-limiting example of A. It can be understood that A is not limited to B.

In the present application, "optionally", "optional", or "option", refers to presence or absence, that is, being selected from any one of two parallel solutions: "presence" or "absence". If there are multiple "optional" in one technical solution, unless otherwise specified and there are no contradictions or mutual constraints, each "optional" is independent.

An implementation of the present application provides a composite current collector, including a substrate layer and a conductive layer, where the substrate layer has a first surface and a second surface that are opposite to each other; the conductive layer is disposed on the first surface and/or the second surface; and a via is provided inside the conductive layer. In this implementation, vias are mainly disposed inside the conductive layer. When a battery is in an abnormal working condition to cause the composite current collector to bear a force abnormally, the conductive layer tends to crack near the via timely, so that the current transmission inside the current collector is weakened, and the risk of ongoing electrochemical reactions inside the battery under the abnormal working condition is reduced, which is conducive to reducing a risk of thermal runaway such as fire or explosion occurring in the battery, thereby improving the safety performance of the battery.

It may be understood that during use of the battery, due to an electrochemical reaction, a temperature may exist inside the battery. When the battery works normally, a relatively suitable temperature is maintained inside the battery. However, when the battery is in an abnormal working condition, the temperature inside the battery may increase dramatically. As the temperature inside the battery continuously increases, the pressure inside the battery increases accordingly, and the battery is prone to a risk of thermal runaway such as fire or explosion. When the composite current collector in this implementation is applied to a battery, when the battery is in an abnormal working condition and a temperature and a pressure increase dramatically, a force borne by the composite current collector also increases abnormally accordingly. When the force borne by the composite current collector increases abnormally, the conductive layer tends to crack near the via timely, so that the current transmission inside the current collector is weakened, and the risk of ongoing electrochemical reactions inside the battery under the abnormal working condition is reduced, which is conducive to reducing a risk of thermal runaway such as fire or explosion occurring in the battery.

Further, in this implementation, disposing the vias in the conductive layer can reduce the weight of the composite current collector, and then may provide a good basis for improving the mass density of the battery.

In some implementations, a plurality of vias is provided, and the plurality of vias is disposed at intervals. Disposition of the plurality of vias may provide more crack sites. When the battery is in an abnormal working condition, current transmission inside the current collector is weakened more timely, thereby further reducing the risk of thermal runaway such as fire or explosion occurring in the battery.

In some implementations, a spacing between adjacent vias ranges from 5 millimeters (mm) to 60 mm. The spacing between adjacent vias falls within this range, so that the conductive layer can maintain relatively stable intrinsic performance based on providing a suitable quantity of vias. It may be understood that the spacing between adjacent vias indicates a distance between centers of the adjacent vias. Optionally, the spacing between adjacent vias may be 5 mm, 10 mm, 15 mm, 20 mm, 25 mm, 30 mm, 35 mm, 40 mm, 45 mm, 50 mm, 45 mm, 60 mm, or the like.

In some implementations, the via includes a blind via. It may be understood that, the blind via represents a via that does not penetrate the conductive layer in the thickness direction of the conductive layer. Optionally, an opening of the blind via faces the substrate layer. That the opening of the blind via faces the substrate layer may be beneficial for embedding another material layer to improve the binding force between the conductive layer and the substrate layer. It may be further understood that the blind via may be machined on the conductive layer in manners such as laser hole creation, etching hole creation, and hot-melting hole creation.

As some examples of the depth of the blind via, the depth of the blind via ranges from 30 nanometers (nm) to 500 nm. That the depth of the blind via falls within this range can provide a good embedding effect, helping to improve the binding force between the conductive layer and the substrate layer. Optionally, the depth of the blind via may be 30 nm, 50 nm, 80 nm, 100 nm, 150 nm, 200 nm, 250 nm, 300 nm, 350 nm, 400 nm, 450 nm, 500 nm, or the like.

As some examples of the hole size of the blind via, the hole size of the blind via ranges from 5 mm to 50 mm. The hole size of the blind via falls within this range, so that there can be a suitable quantity of blind holes and a good embedding effect can be provided. For example, the hole size of the blind via may be 5 mm, 10 mm, 15 mm, 20 mm, 25 mm, 30 mm, 35 mm, 40 mm, 45 mm, 50 mm, or the like.

Optionally, a cross-sectional shape of the blind via includes at least one of a circular shape, an elliptic shape, and a polygonal shape. It may be understood that, the cross section of the blind via represents a cross section perpendicular to the thickness direction of the conductive layer. It may be further understood that when the shape of the cross section of the blind via is a circle, the hole size of the blind via represents the diameter of the circle. When the shape of the cross section of the blind via is an ellipse, the hole size of the blind via represents the length of the major axis of the ellipse. When the shape of the cross section of the blind via is a polygon, the hole size of the blind via represents the side length of the longest side of the polygon.

In some implementations, a percentage of a hole area of the blind via to a cross-sectional area of the conductive layer ranges from 0.5% to 54.5%. It may be understood that the hole area of the blind via represents the area of the cross section of the blind via. Optionally, the percentage of the hole area of the blind via to the cross-sectional area of the conductive layer may be 0.5%, 1%, 3%, 5%, 10%, 15%, 20%, 25%, 30%, 35%, 40%, 45%, 50%, 54.5%, or the like. The percentage of the hole area of the blind via to the cross-sectional area of the conductive layer falls within this range, so that there can be a suitable quantity of blind vias, and the conductive layer can maintain relatively stable intrinsic performance.

In some implementations, the via includes a through-hole via. It may be understood that, the through-hole via represents a via that penetrates the conductive layer in the thickness direction of the conductive layer. In one aspect, disposition of the through-hole via may be beneficial for embedding another material layer to improve the binding force between the conductive layer and the substrate layer. In the other aspect, the via may be used as a gas exhausting passage, helping exhaust a gas that may be generated in a process of preparing the composite current collector.

As some examples of the hole size of the through-hole via, the hole size of the through-hole via ranges from 30 micrometers ($\mu$m) to 500 $\mu$m. The hole size of the through-hole via falls within this range, so that there can be a suitable quantity of through-holes and a good embedding effect can be provided. For example, the hole size of the through-hole via may be 30 $\mu$m, 50 $\mu$m, 80 $\mu$m, 100 $\mu$m, 150 $\mu$m, 200 $\mu$m, 250 $\mu$m, 300 $\mu$m, 350 $\mu$m, 400 $\mu$m, 450 $\mu$m, 500 $\mu$m, or the like.

Optionally, a cross-sectional shape of the through-hole via includes at least one of a circular shape, an elliptic shape, and a polygonal shape. It may be understood that, the cross section of the through-hole via represents a cross section perpendicular to the thickness direction of the conductive layer. It may be further understood that when the shape of the cross section of the through-hole via is a circle, the hole size of the through-hole via represents the diameter of the circle. When the shape of the cross section of the through-hole via is an ellipse, the hole size of the through-hole via represents the length of the major axis of the ellipse. When the shape of the cross section of the through-hole via is a polygon, the hole size of the through-hole via represents the side length of the longest side of the polygon.

In some implementations, a percentage of a hole area of the through-hole via to the cross-sectional area of the conductive layer ranges from 0.001% to 0.484%. It may be understood that the hole area of the through-hole via represents the area of the cross section of the through-hole via. The percentage of the hole area of the through-hole via to the cross-sectional area of the conductive layer falls within this range, so that there can be a suitable quantity of through-hole passages, and the conductive layer can maintain relatively stable intrinsic performance. Optionally, the percentage of the hole area of the through-hole via to the cross-sectional area of the conductive layer may be 0.001%, 0.01%, 0.1%, 0.2%, 0.3%, 0.4%, 0.484%, or the like.

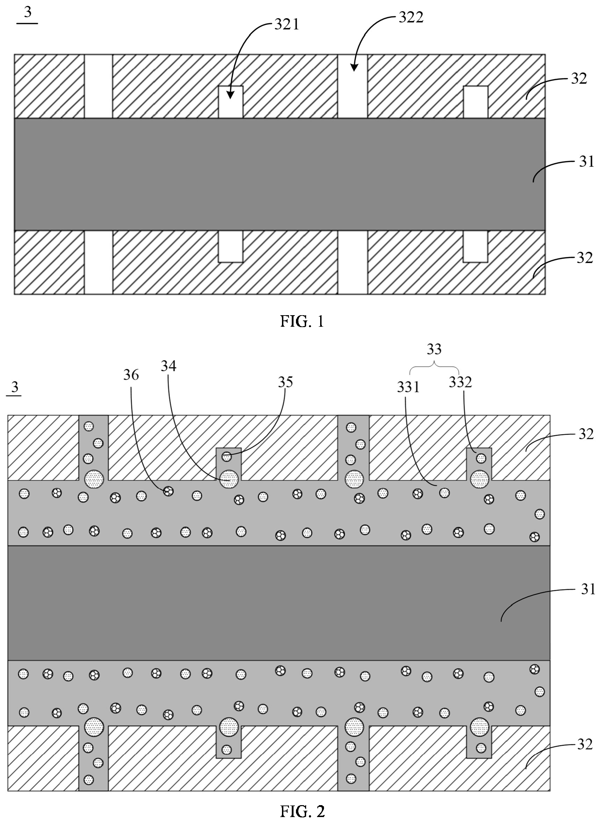

FIG. 1 shows a schematic structure of a composite current collector 3 according to an implementation of the present application. The composite current collector 3 includes a substrate layer 31 and a conductive layer 32. The substrate layer 31 has a first surface and a second surface that are opposite to each other. The conductive layer 32 is disposed on each of the first surface and the second surface. A via is provided inside the conductive layer 32. Further, the via includes a blind via 321 and a through-hole via 322. An opening of the blind via 321 faces the substrate layer 31. After the composite current collector 3 in this implementation is applied to a battery, when the battery is in an abnormal working condition to cause the composite current collector to bear a force abnormally, the conductive layer tends to crack near the via timely, so that the current transmission inside the current collector is weakened, and the risk of ongoing electrochemical reactions inside the battery under the abnormal working condition is reduced, which is conducive to reducing a risk of thermal runaway such as fire or explosion occurring in the battery, thereby improving the safety performance of the battery.

In some implementations, the through-hole via includes first through-hole vias and second through-hole vias, and a hole size of the first through-hole via is greater than a hole size of the second through-hole via. The hole size of the first through-hole via is relatively large, so that when the battery is in an abnormal working condition, the crack of the conductive layer is more likely to spread from the position of the first through-hole via to the surroundings, which is beneficial to increase the crack rate of the conductive layer and weaken current transmission in the current collector more timely. However, the second through-hole via has a relatively small hole size, so that a larger quantity of through-hole vias may be provided per unit area of the conductive layer, thereby further promoting exhausting of a gas that may be generated in a process of preparing the composite current collector.

In some implementations, a ratio of a quantity of the first through-hole vias to a quantity of the second through-hole vias is (20 to 40):(60 to 80). The ratio of the quantity of first through-hole vias to the quantity of second through-hole vias falls within this range, so that the quantity of first through-hole vias having a larger hole size and the quantity of second through-hole vias having a smaller hole size can better match each other, which is beneficial to further promoting the

effects of cracking and gas exhausting of the conductive layer. Optionally, the ratio of the quantity of first through-hole vias to the quantity of second through-hole vias may be 20:80, 25:75, 30:70, 35:65, 40:60, or the like.

In some implementations, a hole size of the first through-hole via ranges from 300 μm to 500 μm. Optionally, the hole size of the first through-hole via may be 300 μm, 320 μm, 350 μm, 380 μm, 400 μm, 420 μm, 450 μm, 480 μm, 500 μm, or the like.

In some implementations, a hole size of the second through-hole via ranges from 30 μm to 300 μm. Optionally, the hole size of the second through-hole via may be 30 μm, 50 μm, 80 μm, 100 μm, 120 μm, 150 μm, 180 μm, 200 μm, 220 μm, 250 μm, 280 μm, 300 μm, or the like.

In some implementations, the composite current collector further includes a binding layer, and the binding layer is located between the substrate layer and the conductive layer. Through disposition of the binding layer, a binding force between the substrate layer and the conductive layer may be improved, helping the composite current collector to maintain a more stable structure. It may be understood that the binding layer may be prepared by applying a binding slurry and then curing the binding slurry.

In some implementations, the binding layer includes a body portion and a protrusion portion, the protrusion portion protrudes from the body portion, and the protrusion portion is embedded in the via. The protrusion portion is embedded in the via of the conductive layer, so that the contact area between the binding layer and the conductive layer can be enlarged, and a more stable binding effect is formed between the binding layer and the conductive layer, thereby further improving the binding force between the conductive layer and the binding layer, further improving the binding force between the substrate layer and the conductive layer, and promoting improvement in the structural stability of the composite current collector.

It may be understood that a same material may be used for the body portion and the protrusion portion. It may be further understood that the body portion and the protrusion portion may be an integrally formed structure.

In some implementations, a thickness of the body portion ranges from 0.5 μm to 5 μm. The thickness of the body portion falls within this range, so that the binding layer can exert a relatively good binding function, and the composite current collector can maintain a relatively suitable overall thickness range. Optionally, the thickness of the body portion may be 0.5 μm, 1 μm, 1.5 μm, 2 μm, 2.5 μm, 3 μm, 3.5 μm, 4 μm, 4.5 μm, 5 μm, or the like.

In some implementations, the protrusion portions are in a one-to-one correspondence with the vias of the conductive layer, and the protrusion portions completely fill the vias of the conductive layer.

It may be understood that, the binding layer includes a binder. Optionally, the binder includes one or more of isocyanate, polyester polyol, polyurethane, an epoxy resin, polyacrylate, poly(vinyl acetate), unsaturated polyester, a phenolic resin, a urea-formaldehyde resin, a modified polyolefin resin, a silicone resin, an ethylene-acrylic acid copolymer, an ethylene-vinyl acetate copolymer, an ethylene-vinyl alcohol copolymer, an acrylate resin, polycarbonate, and polyamide. Optionally, the isocyanate includes isocyanate containing a multifunctional group. Optionally, the binding layer includes one or more of a composition of isocyanate containing a multifunctional group and polyester polyol, and polyurethane. Optionally, the polyurethane includes one or more of thermoplastic polyurethane and reactive polyurethane.

In some implementations, the binding layer includes filler particles. Introducing the filler particles to the binding layer is beneficial to increase the elastic modulus of the composite current collector. Further, a problem of wrinkling in a process of machining the electrode plate may be alleviated. It may be understood that the filler particles are dispersed in the body portion and the protrusion portion of the binding layer.

Optionally, a mass percentage of the filler particles to the binding layer ranges from 10% to 20%. The mass percentage of the filler particles to the binding layer falls within this range, so that the binding layer can have suitable binding performance and a suitable elastic modulus. Further optionally, the mass percentage of the filler particles to the binding layer may be 10%, 11%, 12%, 13%, 14%, 15%, 16%, 17%, 18%, 19%, 20%, or the like.

Optionally, Dv50 of the filler particles ranges from 30 nm to 500 nm. The filler particles whose particle size distribution falls within this range may be relatively uniformly dispersed in the binding layer, thereby promoting further improvement of the elastic modulus of the composite current collector. Further optionally, Dv50 of the filler particles may be 30 nm, 50 nm, 80 nm, 100 nm, 150 nm, 200 nm, 250 nm, 300 nm, 350 nm, 400 nm, 450 nm, 500 nm, or the like.

It can be understood that in the present application, Dv50 refers to the corresponding particle size when the cumulative particle size distribution quantity of particles reaches 50% in a volume cumulative distribution curve. The physical meaning thereof is that particles with a particle size smaller than (or greater than) Dv50 account for 50%. For example, for Dv50, refer to the GB/T 19077-2016 test method. Dv50 may be obtained by using a particle size distribution curve obtained by using a laser diffraction particle size distribution measurement instrument Mastersizer3000.

In some implementations, the filler particles include insulating filler particles. The use of the insulating filler particles can reduce a risk that the introduction of the filler particles negatively affects the electrical conductivity of the composite current collector, thereby helping enable the composite current collector to maintain suitable and stable electrical conductivity.

In some implementations, the filler particles include inorganic filler particles. Optionally, the filler particles include

at least one of aluminum oxide, silicon carbide, silicon nitride, silicon oxide, calcium oxide, boehmite, titanium dioxide, zirconium dioxide, magnesium oxide, zinc oxide, barium sulfate, and boron carbide.

In some implementations, the filler particles include first filler particles, and the first filler particles have one end extending into the body portion and the other end extending into the protrusion portion. In this case, the first filler particles have one part located in the body portion of the binding layer and the other part located in the protrusion portion of the binding layer. In this way, a support site may be provided between the conductive layer and the binding layer, to help improve a support force of the binding layer for the conductive layer, and further improve an elastic modulus of the composite current collector. Optionally, Dv50 of the first filler particles ranges from 200 nm to 500 nm. For example, Dv50 of the first filler particles may be 200 nm, 220 nm, 250 nm, 280 nm, 300 nm, 320 nm, 350 nm, 380 nm, 400 nm, 420 nm, 450 nm, 480 nm, 500 nm, or the like.

In some implementations, the filler particles further include second filler particles, and Dv50 of the second filler particles is less than Dv50 of the first filler particles. The second filler particles have a relatively small particle size distribution, and may be relatively uniformly dispersed in the binding layer, thereby further promoting improvement of the elastic modulus of the composite current collector. In addition, the second filler particles with a relatively small particle distribution can be better dispersed in the protrusion portion of the binding layer, that is, the second filler particles can be better dispersed in the via of the conductive layer, facilitating improvement in mutual support between the binding layer and the conductive layer and improving an elastic modulus of the composite current collector. Optionally, Dv50 of the second filler particles ranges from 30 nm to 200 nm. Further optionally, Dv50 of the second filler particles may be 30 nm, 50 nm, 80 nm, 100 nm, 120 nm, 150 nm, 180 nm, 200 nm, or the like.

In some implementations, a mass ratio of the second filler particles to the first filler particles is (30 to 50):(50 to 70). That the mass ratio of the second filler particles to the first filler particles fall within this range enables the second filler particles and the first filler particles to better match each other, to further improve the elastic modulus of the composite current collector.

In some implementations, the binding layer includes a flame retardant. Introduction of the flame retardant can improve a flame retarding effect of the composite current collector, and further reduce a risk of thermal runaway such as fire or explosion occurring in the battery in an abnormal working condition. It may be understood that, the flame retardant is dispersed in the body portion and the protrusion portion of the binding layer.

Optionally, a mass percentage of the flame retardant to the binding layer ranges from 20% to 40%. The mass percentage of the flame retardant falls within this range, so that the composite current collector can have a relatively good flame retarding effect and the binding layer can have relatively good binding performance. Further optionally, the mass percentage of the flame retardant to the binding layer may be 20%, 22%, 25%, 28%, 30%, 32%, 35%, 38%, 40%, or the like.

In some implementations, the flame retardant includes a particulate flame retardant. The particulate flame retardant may have a corresponding support function for the binding layer while having a flame retarding function, helping to improve the elastic modulus of the composite current collector.

Optionally, the flame retardant includes at least one of decabromodiphenyl oxide, hexabromocyclododecane, polyvinyl chloride, tri-(2,3-dibromopropyl)isocyanate, sodium chloride, sodium acetate, zinc borate, ammonium molybdate, zirconium phosphate, and antimony oxide.

In some implementations, the flame retardant includes an organic flame retardant and an inorganic flame retardant. The organic flame retardant may be better mixed with the binding layer by using a principle of like dissolves like. The inorganic flame retardant may have a corresponding support function for the binding layer while having a flame retarding function. Optionally, a mass percentage of the organic flame retardant to the binding layer ranges from 10% to 20%, and a mass percentage of the inorganic flame retardant to the binding layer ranges from 10% to 20%. Further optionally, the mass percentage of the organic flame retardant to the binding layer may be 10%, 11%, 12%, 13%, 14%, 15%, 16%, 17%, 18%, 19%, 20%, or the like. Further optionally, the mass percentage of the inorganic flame retardant to the binding layer may be 10%, 11%, 12%, 13%, 14%, 15%, 16%, 17%, 18%, 19%, 20%, or the like.

FIG. 2 shows a schematic structure of a composite current collector 3 according to an implementation of the present application. The composite current collector 3 includes a substrate layer 31 and a conductive layer 32. The substrate layer 31 has a first surface and a second surface that are opposite to each other. The conductive layer 32 is disposed on each of the first surface and the second surface. A via is provided inside the conductive layer 32. a plurality of vias is provided, and the plurality of vias is disposed at intervals. the via includes a blind via. the via includes a through-hole via. The composite current collector 3 further includes a binding layer 33, and the binding layer 33 is located between the substrate layer 31 and the conductive layer 32. The binding layer 33 includes a body portion 331 and a protrusion portion 332, the protrusion portion 332 protrudes from the body portion 331, and the protrusion portion 332 is embedded in the via. The binding layer 33 includes filler particles. The filler particles are dispersed in the body portion 331 and the protrusion portion 332 of the binding layer 33. The filler particles include first filler particles 34, and the first filler particles 34 have one end extending into the body portion 331 and the other end extending into the protrusion portion 332. The filler particles further include second filler particles 35, and Dv50 of the second filler particles 35 is less than Dv50 of the first filler particles 34. The binding layer includes a flame retardant 36. The flame retardant 36 is dispersed in the body portion 331 and the

protrusion portion 332 of the binding layer 33.

In some implementations, a surface of the conductive layer further includes a passivation layer. Optionally, the passivation layer includes at least one of chromate, phosphate, aluminum oxide, silicon dioxide, and silicon nitride. The passivation layer may protect the conductive layer and reduce corrosion caused by the electrolyte solution to the conductive layer, thereby helping improve structural stability of the composite current collector. Optionally, the passivation layer is located between the conductive layer and the binding layer. Disposition of the passivation layer enables a good binding effect to be maintained between the conductive layer and the binding layer after the composite current collector is wetted by the electrolyte solution.

In some implementations, the conductive layer includes a metal material. Optionally, the metal material includes at least one of copper, aluminum, nickel, titanium, platinum, iron, cobalt, chrome, tungsten, molybdenum, magnesium, lead, indium, and tin.

In some implementations, the substrate layer includes one or more of polyamide, polyimide, polyethylene terephthalate, polybutylene terephthalate, polyethylene naphthalate, polycarbonate, polyethylene, polypropylene, poly(propyl vinyl), an acrylonitrile-butadienestyrene copolymer, vinyl alcohol, polystyrene, polyvinyl chloride, polyvinylidene difluoride, polytetrafluoroethylene, sodium polystyrene sulfonate, polyacetylene, silicone rubber, polyformaldehyde, polyphenylene ether, polyphenylene sulfide, polyethylene glycol, a poly(sulfur nitride) polymer material, polyphenyl, polypyrrole, polyaniline, polythiophene, polypyridine, cellulose, starch, protein, an epoxy resin, a phenolic resin, a derivative thereof, a cross-linked substance thereof, and a copolymer thereof.

Another implementation of the present application provides an electrode plate. The electrode plate includes the foregoing composite current collector.

Another implementation of the present application provides a secondary battery. The secondary battery includes the foregoing electrode plate.

Another example of the application provides a power consuming apparatus. The power consuming apparatus includes at least one of the foregoing composite current collector, the foregoing electrode plate, and the foregoing secondary battery.

The secondary battery and the power consuming apparatus of the present application are described below with proper reference to the accompanying drawings.

Generally, the secondary battery includes a positive electrode plate, a negative electrode plate, an electrolyte, and a separator. During the charging and discharging process of the battery, active ions are intercalated and deintercalated back and forth between the positive electrode plate and the negative electrode plate. The electrolyte functions to conduct ions between the positive electrode plate and the negative electrode plate. The separator is arranged between the positive electrode plate and the negative electrode plate and mainly serves to prevent a short circuit between the positive and negative electrodes while allowing ions to pass through.

Positive electrode plate

The positive electrode plate includes a positive electrode current collector and a positive electrode film layer arranged on at least one surface of the positive electrode current collector, and the positive electrode film layer includes a positive electrode active material.

As a non-limiting example, the positive electrode current collector has two opposite surfaces in its own thickness direction, and the positive electrode active material layer is disposed on either or both of the two opposite surfaces of the positive electrode current collector.

In some implementations, the positive electrode current collector may be a metal foil or a composite current collector. For example, as the metal foil, an aluminum foil may be used. The composite current collector may include a polymer material base layer or a metal layer located on at least one surface of the polymer material base layer. The composite current collector can be formed by forming a metal material on a polymer material substrate. In the positive electrode current collector, non-limiting examples of the metal material may include one or more of aluminum, an aluminum alloy, nickel, a nickel alloy, titanium, a titanium alloy, silver, a silver alloy, and the like. In the positive electrode current collector, non-limiting examples of the polymer material substrate may include one or more of polypropylene (PP), polyethylene terephthalate (PET), polybutylene terephthalate (PBT), polystyrene (PS), polyethylene (PE), and other substrates.

In some examples, the positive electrode active material may be a positive electrode active material used for a battery and well known in the art. As a non-limiting example, the positive electrode active material may include one or more of the following materials: a lithium-containing phosphate of an olivine structure, a lithium transition metal oxide, and their respective modified compounds. However, the present application is not limited to these materials, and other conventional materials that can be used as positive electrode active materials for batteries can also be used. Only one or a combination of two or more of the positive electrode active materials may be used. Examples of lithium transition metal oxide may be, but are not limited to, one or more selected from the group consisting of lithium cobalt oxide (for example, $LiCoO_2$), lithium

nickel oxide, lithium manganese oxide, lithium nickel cobalt oxide, lithium manganese cobalt oxide, lithium nickel manganese oxide, lithium nickel cobalt manganese oxide, lithium nickel cobalt aluminum oxide, and modified compounds thereof. Non-limiting examples of the lithium-containing phosphate with an olivine structure can include, but are not limited to, one or more of lithium iron phosphate, a composite material of lithium iron phosphate and carbon, lithium manganese phosphate, a composite material of lithium manganese phosphate and carbon, lithium iron manganese phosphate, and a composite material of lithium iron manganese phosphate and carbon. A non-limiting example of the lithium-cobalt oxide may include $LiCoO_2$. A non-limiting example of the lithium-nickel oxide may include $LiNiO_2$. A non-limiting example of the lithium manganese oxide may include $LiMnO_2$, $LiMn_2O_4$, or the like. A non-limiting example of the lithium nickel cobalt manganese oxide may include $LiNi_{1/3}Co_{1/3}Mn_{1/3}O_2$ ($NCM_{333}$ for short), $LiNi_{0.5}Co_{0.2}Mn_{0.3}O_2$ ($NCM_{523}$ for short), $LiNi_{0.5}Co_{0.25}Mn_{0.25}O_2$ ($NCM_{211}$ for short), $LiNi_{0.6}Co_{0.2}Mn_{0.2}O_2$ ($NCM_{622}$ for short), $LiNi_{0.8}Co_{0.1}Mn_{0.1}O_2$ ($NCM_{811}$ for short), or the like. A non-limiting example of the lithium-nickel-cobalt-aluminum oxide may include $LiNi_{0.8}Co_{0.15}Al_{0.05}O_2$.

In some examples, the positive electrode active material layer may further optionally include a binder. Non-limiting examples of the binder may include one or more of polyvinylidene difluoride (PVDF), polytetrafluoroethylene (PTFE), a vinylidene difluoride-tetrafluoroethylene-propylene terpolymer, a vinylidene difluoride-hexafluoropropylene-tetrafluoroethylene terpolymer, a tetrafluoroethylene-hexafluoropropylene copolymer and a fluorine-containing acrylate resin.

In some examples, the positive electrode active material layer may further optionally include a conductive agent. Non-limiting examples of the conductive agent may include one or more of superconducting carbon, acetylene black, carbon black, Ketjen black, carbon dot, carbon nanotubes, graphene, and carbon nanofibers.

In some examples, the positive electrode plate may be prepared in the following manner: dispersing the above components for preparing the positive electrode plate, for example, the positive electrode active material, the conductive agent, the binder, and any other components, in a solvent to form a positive electrode slurry; and coating at least one side surface of the positive electrode current collector with the positive electrode slurry, performing working procedures such as drying and cold pressing, and then obtaining the positive electrode plate. The solvent can be selected from, but is not limited to, any one listed in the foregoing examples, for example, N-methylpyrrolidone (NMP). The surface of the positive electrode current collector coated with the positive electrode slurry may be a single surface of the positive electrode current collector, or two surfaces of the positive electrode current collector. The surface of the positive electrode current collector coated with the positive electrode slurry may be a single surface of the positive electrode current collector, or two surfaces of the positive electrode current collector. A solid content of the positive electrode slurry may range from 40 weight% (wt%) to 80wt%. The viscosity of the positive electrode slurry at the room temperature may be adjusted to 5000 millipascal·second (mPa·s) to 25000 mPa·s. When the positive electrode slurry is applied, the application unit surface density based on a dry weight (deducting the solvent) may range from 15 milligrams/square centimeter ($mg/cm^2$) to 35 $mg/cm^2$. The compaction density of the positive electrode plate may range from 3.0 grams/cubic centimeter ($g/cm^3$) to 3.6 $g/cm^3$, and optionally range from 3.3 $g/cm^3$ to 3.5 $g/cm^3$.

Negative electrode plate

A negative electrode plate includes a negative electrode current collector and a negative electrode active material layer disposed on at least one surface of the negative electrode current collector. The negative electrode active material layer includes a negative electrode active material.

As a non-limiting example, the negative electrode current collector has two opposite surfaces in its own thickness direction, and the negative electrode active material layer is disposed on either or both of the two opposite surfaces of the negative electrode current collector.

In some examples, the negative electrode current collector may be a metal foil or a composite current collector. For example, as the metal foil, a copper foil may be used. The composite current collector may include a polymer material base layer or a metal layer located on at least one surface of the polymer material substrate. The composite current collector can be formed by forming a metal material on a polymer material substrate. In the negative electrode current collector, non-limiting examples of the metal material may include one or more of copper, a copper alloy, nickel, a nickel alloy, titanium, a titanium alloy, silver, a silver alloy, and the like. In the negative electrode current collector, non-limiting examples of the polymer material substrate may include one or more of polypropylene (PP), polyethylene terephthalate (PET), polybutylene terephthalate (PBT), polystyrene (PS), polyethylene (PE), and other substrates.

In some examples, the negative electrode active material may use a negative electrode active material used for batteries well known in the art. As a non-limiting example, the negative electrode active material may include one or more of the following materials: artificial graphite, natural graphite, soft carbon, hard carbon, a silicon-based material, a tin-based material, lithium titanate, or the like. The silicon-based material may include one or more of elemental silicon, a silicon oxide, a silicon-carbon composite, a silicon-nitrogen composite, and a silicon alloy. The tin-based material may include one or more of elemental tin, a tin oxide, and a tin alloy. However, the present application is not limited to such materials, and may alternatively use other conventional materials that can be used as negative electrode active materials for

batteries. Only one or a combination of two or more of the negative electrode active materials may be used.

In some examples, the negative electrode active material layer may further optionally include a binder. The binder may include one or more of styrene butadiene rubber (SBR), polyacrylic acid (PAA), sodium polyacrylate (PAAS), polyacrylamide (PAM), polyvinyl alcohol (PVA), sodium alginate (SA), polymethacrylic acid (PMAA), and carboxymethyl chitosan (CMCS).

In some examples, the negative electrode active material layer may further optionally include a conductive agent. The conductive agent may include one or more of superconducting carbon, acetylene black, carbon black, Ketjen black, carbon dots, carbon nanotubes, graphene, and carbon nanofibers.

In some examples, the negative electrode active material layer further optionally includes another adjuvant, such as a thickener (for example, sodium carboxymethyl cellulose (CMC-Na)).

In some examples, the negative electrode plate may be prepared in the following manner: dispersing the above-mentioned components for preparing the negative electrode plate, for example, the negative electrode active material, the conductive agent, the binder, and any other components, in a solvent (a non-limiting example of the solvent is deionized water) to form a negative electrode slurry; and coating at least one side surface of the negative electrode current collector with the negative electrode slurry, performing working procedures such as drying and cold pressing, and then obtaining the negative electrode plate. The surface of the negative electrode current collector coated with the negative electrode slurry may be a single surface of the negative electrode current collector, or two surfaces of the negative electrode current collector. A solid content of the negative electrode slurry may range from 40wt% to 60wt%. The viscosity of the negative electrode slurry at the room temperature may be adjusted to 2000 mPa·s to 10000 mPa·s. When the negative electrode slurry is applied, the application unit surface density based on a dry weight (deducting the solvent) may range from 75 grams/square meter($g/m^2$) to 220 $g/m^2$. The compaction density of the negative electrode plate may range from 1.0 $g/cm^3$ to 1.8 $g/cm^3$.

Electrolyte

The electrolyte serves to conduct ions between the positive electrode plate and the negative electrode plate. The type of the electrolyte is not particularly limited in the present application, and can be selected according to requirements. For example, the electrolyte can be liquid, gelled, or all solid.

In some implementations, the electrolyte is an electrolyte solution. The electrolyte solution includes an electrolyte salt and a solvent.

In some examples, the electrolyte salt may include one or more of lithium hexafluorophosphate ($LiPF_6$), lithium tetrafluoroborate ($LiBF_4$), lithium perchlorate ($LiClO_4$), lithium hexafluoroarsenate ($LiAsF_6$), lithium bis(fluorosulfonyl) imide (LiFSI), lithium bis(trifluoromethanesulfonyl)imide (LiTFSI), lithium triflate (LiTFS), lithium difluorophosphate ($LiPO_2F_2$), lithium difluoro(oxalato)borate (LiDFOB), lithium bis(oxalato)borate (LiBOB), lithium difluorobis(oxalate) phosphate (LiDFOP), and lithium tetrafluoro(oxalato)phosphate (LiTFOP).

In some examples, the solvent may include one or more of ethylene carbonate (EC,

), propylene carbonate (PC,

), ethyl methyl carbonate (EMC), diethyl carbonate (DEC), dimethyl carbonate (DMC), dipropyl carbonate (DPC), methyl propyl carbonate (MPC), ethyl propyl carbonate (EPC), butylene carbonate (

), fluoroethylene carbonate (FEC), methyl formate, methyl acetate, ethyl acetate, propyl acetate, methyl propionate ethyl propionate, propyl propionate, methyl butyrate, ethyl butyrate, 1,4-butyrolactone, sulfolane, dimethyl sulfone, methyl ethyl sulfone and diethyl sulfone.

In some examples, the electrolyte solution further optionally includes an additive. For example, the additive can include a negative electrode film-forming additive and a positive electrode film-forming additive and can further include additives that can improve some properties of the battery, for example, an additive that improves the overcharging performance of the battery and an additive that improves the high- or low-temperature performance of the battery.

In some implementations, the additive in the electrolyte solution may include, but is not limited to, one or more of fluoroethylene carbonate (FEC), difluoroethylene carbonate (DFEC), trifluoromethyl ethylene carbonate (TFPC), and the like.

Separator

In some examples, the secondary battery further includes a separator. The type of the separator is not specifically limited in the present application, and any well-known separator with a porous structure having good chemical stability and mechanical stability may be selected.

In some examples, the material of the separator may include one or more of glass fiber, non-woven cloth, polyethylene, polypropylene, and polyvinylidene difluoride. The separator can be either a single-layer thin film or a multi-layer composite thin film without special limitations. When the separator is a multi-layer composite thin film, the materials of the layers can be the same or different without special limitations.

In some implementations, the thickness of the separator ranges from 6 μm to 40 μm, and optionally ranges from 12 μm to 20 μm.

In some examples, the positive electrode plate, the negative electrode plate, and the separator may be made into an electrode assembly by a winding process or a laminating process.

In some examples, a secondary battery may include an outer package. The outer package can be used to encapsulate the above electrode assembly and electrolyte.

In some examples, the outer packaging of the secondary battery may be a hard case, such as a hard plastic case, an aluminum case, or a steel case. The outer package of the secondary battery may also be a soft package, for example, a pouch-type soft package. The material of the soft pack may be plastic, and further, a non-limiting example of the plastic may include one or more of polypropylene, polybutylene terephthalate, and polybutylene succinate.

The secondary battery includes at least one battery cell. The secondary battery may include one or more battery cells.

In the present application, unless otherwise specified, a "battery cell" refers to a basic unit that can implement interconversion of chemical energy and electric energy, and further, generally includes at least a positive electrode plate, a negative electrode plate, and an electrolyte. During the charging and discharging process of the battery, active ions are intercalated and deintercalated back and forth between the positive electrode plate and the negative electrode plate. The electrolyte functions to conduct active ions between the positive electrode plate and the negative electrode plate.

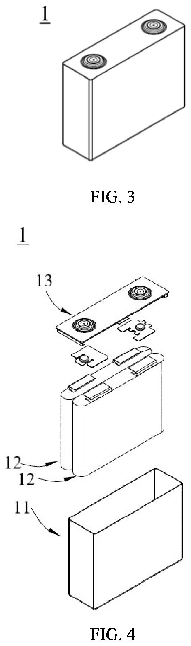

A shape of the battery cell is not particularly limited in the present application, and may be cylindrical, prismatic, or any other shape. FIG. 3 shows a prismatic secondary battery 1 as an example.

In some examples, referring to FIG. 4, the outer package can include a case 11 and a cover plate 13. The case 11 can include a bottom plate and a side plate connected to the bottom plate, and the bottom plate and the side plate enclose to form an accommodating cavity. The case 11 has an opening in communication with the accommodating cavity, and the cover plate 13 can cover the opening to close the accommodating cavity. The positive electrode plate, the negative electrode plate, and the separator may be made into an electrode assembly 12 by a winding process or a laminating process. The electrode assembly 12 is enclosed in the accommodating cavity. An electrolyte solution infiltrates into the electrode assembly 12. The quantity of electrode assemblies 12 contained in the secondary battery 1 may be one or more, and may be selected by a person skilled in the art according to actual requirements.

The secondary battery may be a battery module or a battery pack.

The battery module includes at least one battery cell. The quantity of battery cells contained in the battery module can one or more, and the proper number can be selected by those skilled in the art based on the application and capacity of the battery module.

In the battery module, multiple battery cells may be sequentially disposed in the length direction of the battery module. Certainly, the plurality of battery cells may alternatively be arranged in any other manner. The plurality of battery cells can be further fixed by fasteners.

Optionally, the battery module may further include a housing with an accommodating space, and the plurality of battery cells are accommodated in the accommodating space.

In some examples, the above battery module can be further assembled into a battery pack. The quantity of battery modules contained in the battery pack can be one or more, and the proper number can be selected by those skilled

in the art according to the application and capacity of the battery pack.

The battery pack may include a battery box and a plurality of battery modules arranged in the battery box. The battery box includes an upper box and a lower box. The upper box can cover the lower box to form a closed space for accommodating the battery modules. The plurality of battery modules may be arranged within the battery box in any manner.

In addition, the present application further provides a power consuming apparatus. The power consuming apparatus includes the secondary battery of the present application. The secondary battery may be used as a power supply of the power consuming apparatus, or may be used as an energy storage unit of the power consuming apparatus. The power consuming apparatus may include, but is not limited to, a mobile device, an electric vehicle, an electric train, a ship, a satellite, and an energy storage system. The mobile device may be, for example, a mobile phone, and a laptop; and the electric vehicle may be, for example, without limitation, an all-electric vehicle, a hybrid electric vehicle, a plug-in hybrid electric vehicle, an electric bicycle, an electric scooter, an electric golf cart, and an electric truck.

For the power consuming apparatus, the secondary battery can be selected according to the requirements during use.

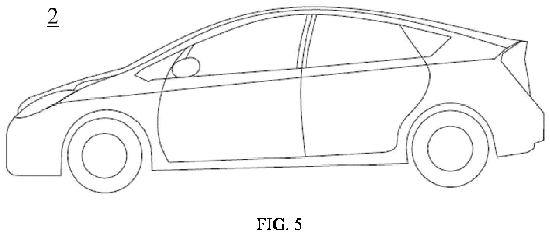

FIG. 5 shows an example of a power consuming apparatus 2. The power consuming apparatus is an all-electric vehicle, a hybrid electric vehicle, a plug-in hybrid electric vehicle, or the like. To satisfy the need of the power consuming apparatus for a high power and high energy density of secondary batteries, a battery pack or a battery module can be used.

The apparatus as another example may be a mobile phone, a tablet computer, a laptop, and the like. The apparatus is generally required to be light and thin, and may use a secondary battery as a power source.

To make the technical problem resolved in the present application, the technical solution, and the beneficial effect clearer, the present application is further described in detail with reference to the examples and the accompanying drawings. It is clear that the described examples are only some, rather than all, of the examples of the present application. The following description of at least one exemplary example is actually merely illustrative and by no means constitutes any limitation on the present application and the use thereof. All other examples obtained by those of ordinary skill in the art based on the examples of the present application without involving any creative effort shall fall within the scope of protection of the present application.

In examples in which no specific technologies or conditions are specified, technologies or conditions described in the literature in the art or product specifications are followed. The reagents or instruments without manufacturer indicated are all conventional products that may be purchased in the market.

Example 1

A method for preparing a composite current collector in this implementation includes:

S101: Holes are created by etching a surface of an aluminum foil to form blind vias and through-hole vias, and the aluminum foil is passivated.
S102: PET is cast to the etched surface of the aluminum foil.
S103: Holes are created by etching a surface of another aluminum foil to form blind vias and through-hole vias, the aluminum foil is passivated, and the surface of the PET is covered with the aluminum foil, to cause the etched surface of the aluminum foil to come into contact with the PET.
S104: The product obtained in step S103 is hot-pressed to form a composite structure of the aluminum foil and the PET substrate layer, and then curing is performed for 72 hours (h).
S105: The aluminum foil is etched and thinned.

Example 2

A method for preparing a composite current collector in this example includes:

S101: Holes are created by etching a surface of an aluminum foil to form blind vias and through-hole vias, and the aluminum foil is passivated.
S102: The binding slurry is applied to the surface of the aluminum foil, and is dried, and then the PET substrate layer is compounded to the surface of the binding slurry. The binding slurry includes a binder, filler particles, and a flame retardant.
S103: The product obtained in step S102 is hot-pressed to form a composite structure of the aluminum foil, a binding layer, and the PET substrate layer, and then curing is performed for 72h.
S104: Holes are created by etching a surface of another aluminum foil to form blind vias and through-hole vias, and the aluminum foil is passivated.
S105: The binding slurry is applied to the surface of the aluminum foil, and is dried, and then the product obtained in

S103 is compounded to the surface of the binding slurry, to cause the PET substrate layer to come into contact with the binding slurry. The binding slurry includes a binder: modified polypropylene, filler particles: aluminum oxide, and a flame retardant: decabromodiphenyl oxide.

S106: The product obtained in step S105 is hot-pressed to form a composite structure of the aluminum foil, a binding layer, and the PET substrate layer, and then curing is performed for 72 h.

S107: The aluminum foil is etched and thinned.

Example 3 to Example 24

Compared with Example 2, Example 3 to Example 24 differ in that blind vias, through-hole vias, filler particles, and flame retardants are different, which are specifically shown in Table 1.

Comparative Example 1

Compared with Example 1, this comparative example differs in that no etching hole creation treatment is performed on the aluminum foil.

Comparative Example 2

Compared with Example 2, this comparative example differs in that no hole creation is performed on the aluminum foil, and the binding slurry includes neither the filler particles nor the flame retarding particle

Table 1

| | Whether there is a blind via | Hole size of a blind via | Depth of a blind via | Spacing between blind vias | Whether there is a through-hole via | Area percentage of a blind via | Hole size of a second through-hole via | Hole size of a first through-hole via | Spacing between through-hole vias | Ratio of the quantity of second through-hole vias to the quantity of first through-hole vias | Area percentage of a through-hole via | Dv50 of second filler particles | Dv50 of first filler particles | Mass ratio of second filler particles to first filler particles | Mass percentage of the filler particles to the binding layer | Mass percentage of the organic flame retardant to the binding layer | Mass percentage of the inorganic flame retardant to the binding layer |
|---|---|---|---|---|---|---|---|---|---|---|---|---|---|---|---|---|---|
| Example 1 | Yes | 5 | 30 | 10 | Yes | 19.6% | 100 | 310 | 5 | 80:20 | 0.085% | / | / | / | / | / | / |
| Example 2 | Yes | 5 | 30 | 10 | Yes | 19.6% | 100 | 310 | 5 | 80:20 | 0.085% | 50 | 300 | 50:50 | 10% | 10% | 10% |
| Example 3 | Yes | 10 | 100 | 15 | Yes | 34.9% | 100 | 310 | 5 | 80:20 | 0.085% | 50 | 300 | 50:50 | 15% | 15% | 15% |
| Example 4 | Yes | 30 | 300 | 40 | Yes | 44.2% | 100 | 310 | 5 | 80:20 | 0.085% | 50 | 300 | 50:50 | 10% | 20% | 10% |
| Example 5 | Yes | 50 | 500 | 60 | Yes | 54.5% | 100 | 310 | 5 | 80:20 | 0.085% | 50 | 300 | 50:50 | 10% | 10% | 20% |
| Example 6 | Yes | 10 | 100 | 15 | Yes | 34.9% | 50 | 500 | 5 | 80:20 | 0.163% | 50 | 300 | 50:50 | 20% | 10% | 10% |
| Example 7 | Yes | 10 | 100 | 15 | Yes | 34.9% | 200 | 400 | 10 | 80:20 | 0.050% | 50 | 210 | 50:50 | 10% | 10% | 10% |
| Example 8 | Yes | 10 | 100 | 15 | Yes | 34.9% | 250 | 310 | 20 | 80:20 | 0.013% | 100 | 300 | 50:50 | 10% | 10% | 10% |
| Example 9 | Yes | 10 | 100 | 15 | Yes | 34.9% | 100 | 310 | 30 | 80:20 | 0.002% | 200 | 500 | 50:50 | 10% | 10% | 10% |
| Example 10 | Yes | 10 | 100 | 15 | Yes | 34.9% | 300 | 500 | 50 | 80:20 | 0.004% | 30 | 300 | 50:50 | 10% | 10% | 10% |
| Example 11 | Yes | 5 | 100 | 60 | Yes | 0.5% | 100 | 310 | 5 | 80:20 | 0.085% | 50 | 300 | 50:50 | 10% | 10% | 10% |
| Example 12 | Yes | 10 | 100 | 15 | Yes | 34.9% | 50 | 310 | 50 | 80:20 | 0.001% | 50 | 300 | 50:50 | 10% | 10% | 10% |
| Example 13 | Yes | 10 | 100 | 15 | Yes | 34.9% | 100 | 310 | 5 | 80:20 | 0.085% | 50 | 300 | 30:70 | 10% | 10% | 10% |
| Example 14 | Yes | 10 | 100 | 15 | Yes | 34.9% | 100 | 310 | 5 | 80:20 | 0.085% | 50 | 300 | 40:60 | 10% | 10% | 10% |
| Example 15 | Yes | 10 | 100 | 15 | Yes | 34.9% | 300 | 500 | 5 | 70:30 | 0.113% | 50 | 300 | 50:50 | 10% | 10% | 10% |
| Example 16 | Yes | 10 | 100 | 15 | Yes | 34.9% | 100 | 310 | 5 | 60:40 | 0.484% | 50 | 300 | 50:50 | 10% | 10% | 10% |

| | | | | | | | | | | | | | | | | | |
|---|---|---|---|---|---|---|---|---|---|---|---|---|---|---|---|---|---|
| Example 17 | Yes | 10 | 100 | 15 | No | 34.9% | / | / | / | / | / | 50 | 300 | 50:50 | 10% | 10% | 10% |
| Example 18 | No | / | / | / | Yes | / | 100 | 310 | 5 | 80:20 | 0.085% | 50 | 300 | 50:50 | 10% | 10% | 10% |
| Example 19 | Yes | 10 | 900 | 15 | Yes | 34.9% | 100 | 310 | 5 | 80:20 | 0.085% | 50 | 300 | 50:50 | 10% | 10% | 10% |
| Example 20 | Yes | 10 | 100 | 15 | Yes | 34.9% | 100 | 1000 | 5 | 80:20 | 0.653% | 50 | 300 | 50:50 | 10% | 10% | 10% |
| Example 21 | Yes | 10 | 100 | 15 | Yes | 34.9% | 100 | 310 | 80 | 80:20 | 0.0002% | 50 | 300 | 50:50 | 10% | 10% | 10% |
| Example 22 | Yes | 10 | 100 | 15 | Yes | 34.9% | 300 | 500 | 3 | 50:50 | 1.483% | 50 | 300 | 50:50 | 10% | 10% | 10% |
| Example 23 | Yes | 10 | 100 | 15 | Yes | 34.9% | 100 | 310 | 5 | 80:20 | 0.085% | 50 | 300 | 100:0 | 10% | 10% | 10% |
| Example 24 | Yes | 10 | 100 | 15 | Yes | 34.9% | 100 | 310 | 5 | 80:20 | 0.085% | 50 | 300 | 0:100 | 10% | 10% | 10% |
| Comparative Example 1 | No | / | / | / | No | / | / | / | / | / | / | / | / | / | 0% | 0% | 0% |
| Comparative Example 2 | No | / | / | / | No | / | / | / | / | / | / | / | / | / | 0% | 0% | 0% |

In Table 1, the unit of the hole size of the blind via is mm. The unit of the depth of the blind via is nm. The unit of the spacing between the blind vias is mm. The unit of the hole size of the second through-hole via is μm. The unit of the hole size of the first through-hole via is μm. The unit of the spacing between the through-hole vias is mm. The unit of Dv50 of the second filler particles is nm. The unit of Dv50 of the first filler particles is nm.

Preparation of a battery

(1) Preparation of positive electrode plate.

$LiNi_{0.8}Co_{0.1}Mn_{0.1}O_2$ and $LiNi_{0.8}Co_{0.2}Mn_{0.3}O_2$ were mixed at a ratio of 17:3 to serve as a positive electrode active substance. The positive electrode active substance, super-conductive carbon black SP as a conductive agent, and polyvinylidene difluoride (PVDF) as a binder were dispersed in N-methylpyrrolidone (NMP) as a solvent at a mass ratio of 95:3:2, and mixed evenly, to obtain a positive electrode slurry; and The positive electrode slurry was uniformly applied on an aluminum foil as a composite current collector and dried at 85 degrees Celsius (°C) followed by cold pressing, die cutting, slitting, to prepare a positive electrode plate. The composite current collector is a composite current collector in the examples and the comparative examples.

(2) Preparation of negative electrode plate.

The negative electrode active material graphite, the conductive agent acetylene black, the thickener sodium hydroxymethyl cellulose, and the binder styrene-butadiene rubber were added to the solvent water at a mass ratio of 96:2:1:1 and mixed uniformly to prepare a negative electrode slurry. The negative electrode slurry was uniformly applied on a negative electrode current collector, dried at 85°C and then cold-pressed at the pressure of 40 tonnes, where the cold-pressing was performed by using a cylindrical cold-pressing roller at a cold-pressing speed of 20 meters/minute (m/min) and a temperature of 25°C, to prepare a negative electrode plate.

(3) The separator was a polypropylene separator.

(4) Preparation of an electrolyte solution

$LiPF_6$ was dissolved in a mixed solvent of ethylene carbonate, dimethyl carbonate, and methyl ethyl carbonate (where the volume ratio of ethylene carbonate, dimethyl carbonate, and methyl ethyl carbonate was 1:2:1), and an additive fluoroethylene carbonate (FEC) was added, to obtain an electrolyte solution. The concentration of $LiPF_6$ in the electrolyte solution is 1 mole/liter (mol/L), and the mass percentage of FEC is 5wt%.

Test Example

(1) An elastic modulus of the composite current collector is tested, and a test method is as follows: The current collector is cut into a shape of 15 mm × 150 mm strips, and a stretching test is performed at a gauge length of 50 mm and a stretching speed of 50 millimeters/minute (mm/min) by using a universal testing machine, until cracking occurs in the test. A chord slope method is used for calculation by using a chord slope corresponding to a strain ranging from 0.1% to 1%. $E=(\sigma 2-\sigma 1)/(\varepsilon 2-\varepsilon 1)$, where E is an elastic modulus, and $\sigma 1$ is a stress in the unit of gigapascal (GPa) measured when a strain value $\varepsilon 1 = 0.001$ (0.1%); and $\sigma 2$ is a stress in the unit of GPa measured when a strain value $\varepsilon 2 = 0.01$ (1%). Results are shown in Table 2.

(2) A peeling strength of the conductive layer in the composite current collector is tested, and a test method is as follows: After a sample is laminated to a non-corona side of an ethylene-acrylic acid copolymer (EAA) film, the EAA film is covered with PET with a thickness of 12 μm, is placed on a heat sealing machine, and is laminated under a temperature of 120°C and a pressure of 0.2 megapascal (MPa). The laminated sample is trimmed to obtain a sample having a length of 100 mm and a width of 20 mm, and the non-laminated side of the conductive layer is laminated to a steel plate by using a 3M double-faced adhesive tape; the sample is clamped to a jig of a testing machine, and is subject to a 180° peeling test at a spacing of 50 mm and a speed of 300 mm/min, where a value of a peeling force is read and is converted into a unit of newton/meter (N/m), there are 5 parallel samples, and an average value of the peeling force is finally taken; and the average value of the peeling force = the sum of the peeling forces of the 5 test samples/5. Results are shown in Table 2.
(3) Whether the coating is wrinkled is tested, and a test method is as follows: A one-into-four coating design is used, whether there is wrinkling at a tab during coating and whether there is a bulge at a position of the tab during rolling are observed, and it is determined that wrinkling exists when the bulge exceeds 1 mm. Results are shown in Table 2.
(4) A nail penetration pass rate test is performed on the battery, and a test method is as follows: After the cell is fully charged, the cell is fixed on a jig, and a high-temperature resistant steel nail having a 3mm diameter penetrates through the cell at a speed of 80 millimeters/second (mm/s); after nail penetration, if smoke is produced, fire starts, or an explosion-proof valve is pushed open, it is determined that the cell has not passed the nail penetration test; and after nail penetration, if no smoke is produced, no fire starts, and the explosion-proof valve is not pushed open, it is determined that the cell has passed the nail penetration test. A total of 5 parallel sample cells are tested, and if the quantity of cells having passed the nail penetration is x, the pass rate is x/5 * 100%. Results are shown in Table 2.
(5) A cycle test is performed on the battery, and a test method is as follows: Cycling of charging at a rate of 1 coulomb (C) and discharging at a rate of 1C is performed on a battery cell under a high-temperature condition of 60°C, until the capacity fades to 80% of the initial capacity, and the quantity of cycles corresponding to this time, that is, the cycle performance of the corresponding battery, is recorded. Results are shown in Table 2.
(6) A DCR test is performed on the battery, and a test method is as follows: The battery cell is adjusted to a state of 50% SOC, is discharged for 30 seconds (s) at a rate of 4C (the corresponding discharging current is I), and a voltage difference $\Delta V$ before and after 30s of discharging is recorded. A DCR corresponding to 50%SOC is calculated according to the following formula: DCR = $\Delta V/I$, to obtain DCR data of each battery cell. Results are shown in Table 2.

Table 2

| | Elastic modulus of the composite current collector | Peeling strength of the conductive layer | Whether coating is wrinkled | Nail penetration pass rate | Quantity of cycles | DCR |
|---|---|---|---|---|---|---|
| Example 1 | 5.8 | 168 | Yes | 80% | 395 | 1.95 |
| Example 2 | 8.5 | 245 | No | 100% | 512 | 1.50 |
| Example 3 | 8.7 | 248 | No | 100% | 509 | 1.48 |
| Example 4 | 8.0 | 247 | No | 100% | 507 | 1.49 |
| Example 5 | 8.3 | 243 | No | 100% | 508 | 1.48 |
| Example 6 | 8.4 | 242 | No | 100% | 505 | 1.52 |
| Example 7 | 8.7 | 241 | No | 100% | 511 | 1.53 |
| Example 8 | 8.2 | 245 | No | 100% | 508 | 1.51 |
| Example 9 | 8.3 | 242 | No | 100% | 510 | 1.47 |
| Example 10 | 8.2 | 245 | No | 100% | 504 | 1.46 |
| Example 11 | 8.1 | 241 | No | 100% | 503 | 1.48 |
| Example 12 | 8.6 | 243 | No | 100% | 506 | 1.45 |
| Example 13 | 8.3 | 248 | No | 100% | 502 | 1.54 |
| Example 14 | 8.4 | 246 | No | 100% | 505 | 1.52 |
| Example 15 | 8.3 | 243 | No | 100% | 504 | 1.51 |

(continued)

| | Elastic modulus of the composite current collector | Peeling strength of the conductive layer | Whether coating is wrinkled | Nail penetration pass rate | Quantity of cycles | DCR |
|---|---|---|---|---|---|---|
| Example 16 | 8.4 | 245 | No | 100% | 503 | 1.55 |
| Example 17 | 7.6 | 229 | No | 60% | 488 | 1.61 |
| Example 18 | 7.6 | 223 | No | 60% | 490 | 1.58 |
| Example 19 | 7.7 | 221 | No | 100% | 312 | 1.92 |
| Example 20 | 6.3 | 225 | Yes | 100% | 435 | 1.76 |
| Example 21 | 7.8 | 222 | No | 20% | 498 | 1.57 |
| Example 22 | 6.5 | 221 | Yes | 100% | 335 | 1.89 |
| Example 23 | 7.1 | 222 | Yes | 80% | 495 | 1.58 |
| Example 24 | 7.3 | 225 | Yes | 80% | 494 | 1.59 |
| Comparative Example 1 | 6.0 | 147 | Yes | 0% | 330 | 1.98 |
| Comparative Example 2 | 5.9 | 155 | Yes | 0% | 326 | 2.15 |

In Table 2, the unit of the elastic modulus of the current collector is Gpa. The unit of the peeling strength of the conductive layer is N/m. The unit of the quantity of cycles is round. The unit of the DCR is milliohm (m$\Omega$).

It can be seen from Table 1 and Table 2 that, in terms of the expression of the nail penetration pass rate, the nail penetration pass rates of the batteries in Example 1 to Example 24 are higher than the nail penetration pass rates of the batteries in Comparative Example 1 to Comparative Example 2, indicating that in the composite current collector, the safety performance of the battery can be improved by disposing the vias in the conductive layer.

It can be seen from Example 2 to Example 16 that, when the hole size of the blind vias, the depth of the blind vias, the spacing between the blind vias, the hole size of the second through-hole via, the hole size of the first through-hole via, the spacing between the through-hole vias, the ratio of the quantity of second through-hole vias to the quantity of first through-hole vias, the Dv50 of the second filler particles, the Dv50 of the first filler particles, the mass ratio of the second filler particles to the first filler particles, the mass percentage of the filler particles in the binding layer, the mass percentage of the organic flame retardant in the binding layer, and the mass percentage of the inorganic flame retardant in the binding layer fall within corresponding suitable ranges, a corresponding test can achieve a relatively good result. For example, the elastic modulus of the composite current collector is relatively high, the peeling strength of the conductive layer is relatively large, the coating is non wrinkled, the nail penetration pass rate of the battery is relatively high, the quantity of cycles is relatively large, and the DCR is relatively small.

It can be seen by comparing Example 17 with Example 3 that, when there is no through-hole via in the conductive layer, the elastic modulus of the current collector is reduced to some extent. Probably because a support function between the conductive layer and the binding layer is reduced, the elastic modulus is reduced. The peeling strength of the conductive layer is reduced to some extent. Probably because it is difficult to exhaust a gas generated in a process of preparing the composite current collector through the through-hole via in time, the peeling strength of the conductive layer is reduced. The nail penetration pass rate is reduced. Probably because trigger points of crack of the conductive layer are reduced, it is difficult for the conductive layer to crack in time, and the nail penetration pass rate is reduced.

It can be seen by comparing Example 18 with Example 3 that, when there is no blind via in the conductive layer, the elastic modulus of the current collector is reduced to some extent. Probably because a support function between the conductive layer and the binding layer is reduced, the elastic modulus is reduced. The peeling strength of the conductive layer is reduced to some extent. Probably because the contact area between the binding layer and the conductive layer is reduced, the peeling strength of the conductive layer is reduced. The nail penetration pass rate is reduced. Probably because the quantity of sites of crack of the conductive layer is reduced, it is difficult for the conductive layer to crack in time, and the nail penetration pass rate is reduced.

It can be seen from Example 19 and Example 3 that, when the depth of the blind via is relatively large, the electrical conductivity of the conductive layer may be reduced, thereby reducing the quantity of cycles and increasing the DCR.

It can be seen from Example 20 and Example 3 that, when the hole size of the first through-hole via is relatively

large, the mechanical property of the conductive layer may be lowered, thereby wrinkling the coating. In addition, when the hole size of the first through-hole via is relatively large, the electrical conductivity of the conductive layer may be reduced, thereby reducing the quantity of cycles and increasing the DCR.

It can be seen from Example 21 and Example 3 that, when the spacing between the through-hole vias is relatively large, the through-hole vias are relatively sparsely arranged, so that trigger points of crack of the conductive layer is reduced, and then the nail penetration pass rate is reduced.

It can be seen from Example 22 and Example 3 that, when the spacing between the through-hole vias is relatively small, the through-hole vias are relatively densely arranged, which may affect the electrical conductivity of the conductive layer, thereby reducing the quantity of cycles and increasing the DCR.

It can be seen from Example 23, Example 24, and Example 3 that, when the first filler particles or the second filler particles are not included, the elastic modulus is reduced, the coating is wrinkled, and the nail penetration pass rate is reduced. Probably because the filling effect of the filler particles is insufficient, the elastic modulus is reduced, and the coating is wrinkled. In addition, when the filling effect of the filler particles is insufficient, the flame retarding effect may be reduced to some extent, and then the nail penetration pass rate may be reduced to some extent.

The technical features in the foregoing examples may be randomly combined. For simplicity of description, all possible combinations of the technical features in the foregoing examples are not described. However, it should be considered that these combinations of technical features fall within the scope recorded in the specification provided that these combinations of technical features do not have any conflict.

The foregoing examples show only several implementations of the present application, and are described in detail, but are not to be construed as a limitation on the patent scope of the present invention. It should be noted that for persons of ordinary skill in the art, several variations and improvements may be further made without departing from the concept of the present application. These variations and improvements should also be deemed as falling within the scope of protection of the present application. Therefore, the scope of protection of the patent of the present application shall be subject to the appended claims.

## Claims

1. A composite current collector, comprising a substrate layer and a conductive layer, wherein the substrate layer has a first surface and a second surface that are opposite to each other; the conductive layer is disposed on the first surface and/or the second surface; and a via is provided inside the conductive layer.

2. The composite current collector according to claim 1, wherein a plurality of vias is provided, and the plurality of vias is disposed at intervals.

3. The composite current collector according to claim 2, wherein a spacing between adjacent vias ranges from 5 mm to 60 mm.

4. The composite current collector according to any one of claims 1 to 3, wherein the via comprises a blind via.

5. The composite current collector according to claim 4, wherein an opening of the blind via faces the substrate layer.

6. The composite current collector according to claim 4 or 5, wherein a depth of the blind via ranges from 30 nm to 500 nm.

7. The composite current collector according to any one of claims 4 to 6, wherein a hole size of the blind via ranges from 5 mm to 50 mm.

8. The composite current collector according to any one of claims 4 to 7, wherein a percentage of a hole area of the blind via to a cross-sectional area of the conductive layer ranges from 0.5% to 54.5%.

9. The composite current collector according to any one of claims 4 to 8, wherein a cross-sectional shape of the blind via comprises at least one of a circular shape, an elliptic shape, and a polygonal shape.

10. The composite current collector according to any one of claims 1 to 9, wherein the via comprises a through-hole via.

11. The composite current collector according to claim 10, wherein a hole size of the through-hole via ranges from 30 $\mu$m to 500 $\mu$m.

12. The composite current collector according to claim 10 or 11, wherein a percentage of a hole area of the through-hole via to the cross-sectional area of the conductive layer ranges from 0.001% to 0.484%.

13. The composite current collector according to any one of claims 10 to 12, wherein a cross-sectional shape of the through-hole via comprises at least one of a circular shape, an elliptic shape, and a polygonal shape.

14. The composite current collector according to any one of claims 10 to 13, wherein the through-hole via comprises first through-hole vias and second through-hole vias, and a hole size of the first through-hole via is greater than a hole size of the second through-hole via.

15. The composite current collector according to claim 14, wherein a ratio of a quantity of the first through-hole vias to a quantity of the second through-hole vias is (20 to 40):(60 to 80).

16. The composite current collector according to claim 14 or 15, wherein a hole size of the first through-hole via ranges from 300 μm to 500 μm.

17. The composite current collector according to any one of claims 14 to 16, wherein a hole size of the second through-hole via ranges from 30 μm to 300 μm.

18. The composite current collector according to any one of claims 1 to 17, wherein the composite current collector further comprises a binding layer, and the binding layer is located between the substrate layer and the conductive layer.

19. The composite current collector according to claim 18, wherein the binding layer comprises a body portion and a protrusion portion, the protrusion portion protrudes from the body portion, and the protrusion portion is embedded in the via.

20. The composite current collector according to claim 19, wherein a thickness of the body portion ranges from 0.5 μm to 5 μm.

21. The composite current collector according to any one of claims 18 to 20, wherein the binding layer comprises a binder.

22. The composite current collector according to claim 21, wherein the binder comprises one or more of isocyanate, polyester polyol, polyurethane, an epoxy resin, polyacrylate, poly(vinyl acetate), unsaturated polyester, a phenolic resin, a urea-formaldehyde resin, a modified polyolefin resin, a silicone resin, an ethylene-acrylic acid copolymer, an ethylene-vinyl acetate copolymer, an ethylene-vinyl alcohol copolymer, an acrylate resin, polycarbonate, and polyamide.

23. The composite current collector according to any one of claims 18 to 22, wherein the binding layer comprises filler particles.

24. The composite current collector according to claim 23, wherein a mass percentage of the filler particles to the binding layer ranges from 10% to 20%.

25. The composite current collector according to claim 23 or 24, wherein Dv50 of the filler particles ranges from 30 nm to 500 nm.

26. The composite current collector according to any one of claims 23 to 25, wherein the filler particles comprise insulating filler particles.

27. The composite current collector according to any one of claims 23 to 26, wherein the filler particles comprise at least one of aluminum oxide, silicon carbide, silicon nitride, silicon oxide, calcium oxide, boehmite, titanium dioxide, zirconium dioxide, magnesium oxide, zinc oxide, barium sulfate, and boron carbide.

28. The composite current collector according to any one of claims 23 to 27, wherein the filler particles comprise first filler particles, and the first filler particles have one end extending into the body portion and the other end extending into the protrusion portion.

29. The composite current collector according to claim 28, wherein Dv50 of the first filler particles ranges from 200 nm to

500 nm.

**30.** The composite current collector according to claim 28 or 29, wherein the filler particles further comprise second filler particles, and Dv50 of the second filler particles is less than Dv50 of the first filler particles.

**31.** The composite current collector according to claim 30, wherein Dv50 of the second filler particles ranges from 30 nm to 200 nm.

**32.** The composite current collector according to claim 30 or 31, wherein a mass ratio of the second filler particles to the first filler particles is (30 to 50):(50 to 70).

**33.** The composite current collector according to any one of claims 18 to 32, wherein the binding layer comprises a flame retardant.

**34.** The composite current collector according to claim 33, wherein a mass percentage of the flame retardant to the binding layer ranges from 20% to 40%.

**35.** The composite current collector according to claim 33 or 34, wherein the flame retardant comprises at least one of decabromodiphenyl oxide, hexabromocyclododecane, polyvinyl chloride, tri-(2,3-dibromopropyl)isocyanate, sodium chloride, sodium acetate, zinc borate, ammonium molybdate, zirconium phosphate, and antimony oxide.

**36.** The composite current collector according to any one of claims 33 to 35, wherein the flame retardant comprises an organic flame retardant and an inorganic flame retardant, a mass percentage of the organic flame retardant to the binding layer ranges from 10% to 20%, and a mass percentage of the inorganic flame retardant to the binding layer ranges from 10% to 20%.

**37.** The composite current collector according to any one of claims 1 to 36, wherein a surface of the conductive layer further comprises a passivation layer.

**38.** The composite current collector according to claim 37, wherein the passivation layer comprises at least one of chromate, phosphate, aluminum oxide, silicon dioxide, and silicon nitride.

**39.** An electrode plate, comprising the composite current collector according to any one of claims 1 to 38.

**40.** A secondary battery, comprising the electrode plate according to claim 39.

**41.** A power consuming apparatus, comprising at least one of the composite current collector according to any one of claims 1 to 38, the electrode plate according to claim 39, and the secondary battery according to claim 40.

3
321
322
32
31
32

FIG. 1

33
34
36
35
331
332
3
32
31
32

FIG. 2

1

FIG. 3

1
13
12
12
11

FIG. 4

2

FIG. 5

# INTERNATIONAL SEARCH REPORT

International application No. **PCT/CN2024/092661**

**A. CLASSIFICATION OF SUBJECT MATTER**

H01M4/80(2006.01)i；H01M4/70(2006.01)i；H01M10/00(2006.01)i

According to International Patent Classification (IPC) or to both national classification and IPC

**B. FIELDS SEARCHED**

Minimum documentation searched (classification system followed by classification symbols)

IPC：H01M4/-；H01M10/-

Documentation searched other than minimum documentation to the extent that such documents are included in the fields searched

Electronic data base consulted during the international search (name of data base and, where practicable, search terms used)

CNTXT, ENTXTC, DWPI, CNKI: 电池, 极片, 集流体, 盲孔, 通孔, 孔, 槽, 洞, battery, pole piece, current collector, blind hole, through hole, hole, groove

**C. DOCUMENTS CONSIDERED TO BE RELEVANT**

| Category* | Citation of document, with indication, where appropriate, of the relevant passages | Relevant to claim No. |
|---|---|---|
| X | CN 114284506 A (XIAMEN HITHIUM NEW ENERGY TECHNOLOGY CO., LTD.) 05 April 2022 (2022-04-05)<br>description, embodiments 1 and 9, and figures 1, 2, 5, and 6 | 1-4, 6, 9-11, 13, 18, 21-27, 33-41 |
| X | CN 109994740 A (NINGDE AMPEREX TECHNOLOGY LIMITED) 09 July 2019 (2019-07-09)<br>description, paragraphs [0080] and [0083], and embodiment 2, and figures 1A and 1B | 1, 2, 10-13, 18, 21-27, 33-41 |
| X | CN 108281662 A (CONTEMPORARY AMPEREX TECHNOLOGY CO., LTD.) 13 July 2018 (2018-07-13)<br>claims 1, 7, 13, 14 | 1, 2, 10, 13, 18, 21-27, 33-41 |
| X | CN 115832195 A (TIANJIN LISHEN BATTERY JOINT-STOCK CO., LTD.) 21 March 2023 (2023-03-21)<br>description, paragraphs [0010]-[0044], and figures 1 and 2 | 1, 2, 10, 13, 18, 21-27, 33-41 |
| A | CN 114464813 A (CHONGQING ZIJIAN NEW ENERGY CO., LTD.) 10 May 2022 (2022-05-10)<br>claims 1-10 | 1-41 |

☑ Further documents are listed in the continuation of Box C. ☑ See patent family annex.

* Special categories of cited documents:

- "A" document defining the general state of the art which is not considered to be of particular relevance
- "D" document cited by the applicant in the international application
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| **08 July 2024** | **16 July 2024** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | Telephone No. |

Form PCT/ISA/210 (second sheet) (July 2022)

INTERNATIONAL SEARCH REPORT

International application No.
PCT/CN2024/092661

C. DOCUMENTS CONSIDERED TO BE RELEVANT

| Category* | Citation of document, with indication, where appropriate, of the relevant passages | Relevant to claim No. |
|---|---|---|
| A | US 11784312 B1 (CONTEMPORARY AMPEREX TECHNOLOGY CO., LTD.) 10 October 2023 (2023-10-10) entire document | 1-41 |

Form PCT/ISA/210 (second sheet) (July 2022)

**INTERNATIONAL SEARCH REPORT**
**Information on patent family members**

International application No.
**PCT/CN2024/092661**

| Patent document cited in search report | | | Publication date (day/month/year) | Patent family member(s) | | | Publication date (day/month/year) |
|---|---|---|---|---|---|---|---|
| CN | 114284506 | A | 05 April 2022 | None | | | |
| CN | 109994740 | A | 09 July 2019 | US | 2020313155 | A1 | 01 October 2020 |
| | | | | US | 11211594 | B2 | 28 December 2021 |
| CN | 108281662 | A | 13 July 2018 | EP | 3367485 | A1 | 29 August 2018 |
| | | | | EP | 3367485 | A4 | 12 September 2018 |
| | | | | JP | 2018113242 | A | 19 July 2018 |
| | | | | JP | 6431571 | B2 | 28 November 2018 |
| | | | | WO | 2018129836 | A1 | 19 July 2018 |
| CN | 115832195 | A | 21 March 2023 | None | | | |
| CN | 114464813 | A | 10 May 2022 | None | | | |
| US | 11784312 | B1 | 10 October 2023 | WO | 2023082036 | A1 | 19 May 2023 |
| | | | | EP | 4203112 | A1 | 28 June 2023 |
| | | | | EP | 4203112 | A4 | 15 November 2023 |

Form PCT/ISA/210 (patent family annex) (July 2022)

## REFERENCES CITED IN THE DESCRIPTION

*This list of references cited by the applicant is for the reader’s convenience only. It does not form part of the European patent document. Even though great care has been taken in compiling the references, errors or omissions cannot be excluded and the EPO disclaims all liability in this regard.*

### Patent documents cited in the description


- CN 2023116176116
- GB 190772016 T